# EUROPEAN PATENT SPECIFICATION

(11) **EP 4 124 506 B1**
(45) Date of publication and mention of the grant of the patent: **02.04.2025**
(21) Application number: 22186401.0
(22) Date of filing: 22.07.2022
(51) Int. Cl.: B60P 3/40, B60P 7/13, B60P 1/48

(54) **A TRAILER ARRANGED FOR LOADING AND TRANSPORTING A LOAD SUCH AS AN INTERMODAL CONTAINER, A TRANSPORT ARRANGEMENT COMPRISING A TOWING VEHICLE AND THE TRAILER AND A METHOD FOR LOADING AND TRANSPORTING A LOAD SUCH AS AN INTERMODAL CONTAINER USING THE TRAILER**
ANHÄNGER, DER ZUM LADEN UND TRANSPORTIEREN EINER LAST, Z.B. EINES INTERMODALEN CONTAINERS, EINGERICHTET IST, EINE TRANSPORTVORRICHTUNG, DIE EIN ZUGFAHRZEUG UND DEN ANHÄNGER UMFASST, UND EIN VERFAHREN ZUM LADEN UND TRANSPORTIEREN EINER LAST, Z.B. EINES INTERMODALEN CONTAINERS, UNTER VERWENDUNG DES ANHÄNGERS
REMORQUE AGENCÉE POUR LE CHARGEMENT ET LE TRANSPORT D'UNE CHARGE TELLE QU'UN CONTENEUR INTERMODAL, AGENCEMENT DE TRANSPORT COMPRENANT UN VÉHICULE DE REMORQUAGE ET LA REMORQUE ET PROCÉDÉ POUR LE CHARGEMENT ET LE TRANSPORT D'UNE CHARGE TELLE QU'UN CONTENEUR INTERMODAL UTILISANT LA REMORQUE

(30) Priority: 30.07.2021 NL 2028889
(43) Date of publication of application: 01.02.2023
(73) Proprietor: Trequip B.V., 9131EG EE (NL)
(72) Inventor: HAVEMAN, Hendrik, EE (NL); HOEKSTRA, Peter, EE (NL)
(74) Representative: Algemeen Octrooi- en Merkenbureau B.V.

(56) References cited:
- EP-A1- 0 300 813
- WO-A1-2010/066255
- AU-B2- 528 555
- DE-A1- 3 007 279
- US-B2- 10 329 788

## Description

According to a first aspect the present disclosure relates to a trailer arranged for loading and transporting a load such as an intermodal container.

According to a second aspect the present disclosure relates to a transport arrangement comprising a towing vehicle and a trailer according to the first aspect of the present disclosure.

According to a third aspect, the present disclosure relates to a method for loading and transporting a load such as an intermodal container using a trailer according to the first aspect of the present disclosure.

Trailers are generally used for transporting loads such as ISO container, also referred to as intermodal container or shipping container. The containers may be placed on the trailer using a known lifting apparatus such as container crane, a container lift truck or the like.

For situations wherein such a known lifting apparatus is not available the towing vehicle may be provided for instance with a winch or crane arm for pulling the load onto the trailer in a towing direction of the trailer.

A drawback of such a winch or crane arm is that a relative long length is required for positioning the load onto the trailer. In particular on building sites and industrial areas the space available for loading the load onto the trailer may be rather limited making loading and unloading of the low in the towing direction of the trailer relatively challenging or even impossible.

EP 0300813A1 discloses a load handling device.

The trailer according to the present disclosure is arranged for loading and transporting a load such as an intermodal container, wherein said trailer comprises:
- a front end arrangement arranged for coupling said trailer to a towing vehicle for towing said trailer and arranged for supporting a part said load;
- a rear end arrangement arranged for supporting another part of said load at a side of said load facing away from said front end arrangement and comprising wheels for supporting said rear end arrangement on a ground surface;
- a loading arrangement arranged for loading said load onto said trailer in a loading direction that is transverse to a towing direction of said trailer;
- a frame connecting said front end arrangement to said rear end arrangement,
- a height adjustment arrangement arranged for varying a height of said frame above said ground surface,
wherein said height adjustment arrangement is arranged for moving said frame between a first height position wherein said frame is resting on said ground surface for said loading of said load onto said trailer and a second height position wherein said frame is in a raised position for said transporting, by said trailer, of said load.

By providing the loading arrangement the need for a relative long length for positioning the load onto the trailer is avoided. The present disclosure relies at least partly on the insight that by loading the load onto the container in a loading direction that is transverse to a towing direction a relative short distance is required next to the load instead of a relative long distance in front of the load. In particular in situations as mentioned previously on building sites and industrial areas a relative small free distance next to the load may be more easily realised than a relative long free distance in front of the load.

In addition, by providing the trailer with the loading arrangement there is no longer a need for using a towing vehicle provided with a winch or a crane arm thereby increasing the flexibility as regards transport planning or even reducing costs for transporting the load.

Preferably, said frame comprises an extension arrangement for varying a distance, in said towing direction, between said front end arrangement and said rear end arrangement for accommodating loads of different lengths. This is beneficial for realising a relative flexible transport solution wherein the trailer may be used for a relative large range of different loads.

Preferably, said frame further comprises a locking arrangement arranged for, in a first state of said locking arrangement, maintaining said distance, in said towing direction, between said front end arrangement and said rear end arrangement, and, in a second state of said locking arrangement, allowing said distance, in said towing direction, to be varied.

Preferably, said frame comprises two frame parts, wherein outer dimensions of a first frame part of said two frame parts are smaller than inner dimensions of a second frame part of said two frame parts and wherein said two frame parts are slidably connected to each other for varying said distance between said front end arrangement and said rear end arrangement.

Preferably, said frame supports said loading arrangement.

Preferably, said frame is removably connected to said front end arrangement and said rear end arrangement. This is beneficial for allowing said frame to be removed, for instance after loading said load and before transporting said load and thereby reducing the weight of the trailer allowing to load a relative heavy load.

In an embodiment of the trailer according to the first aspect of the present disclosure, said frame is an integral part of said load.

According to the invention, the trailer comprises:
- a height adjustment arrangement arranged for varying a height of said frame above said ground surface. This allows for avoiding the need for lifting the load, or at least lifting the load by a relative small height, before moving the load onto the trailer.

The height adjustment arrangement is arranged for moving said frame between a first height position wherein said frame is resting on said ground surface for said loading of said load onto said trailer and a second height position wherein said frame is in a raised position for said transporting, by said trailer, of said load. Resting said frame on the ground surface during loading of the load is beneficial for stabilizing the trailer thereby avoiding or at least significantly reducing the risk of the trailer tipping over.

In a practical embodiment of the trailer according to the first aspect, said height adjustment arrangement comprises a first height adjustment device for varying a height of said front end arrangement relative to said ground surface for said varying said height of said frame above said ground surface and/or a second height adjustment device for varying a height of said rear end arrangement relative to said ground surface for varying said height of said frame above said ground surface.

Preferably, said loading arrangement comprises a plurality fixation elements for fixating said load during said loading and said transporting.

In this regard, it is beneficial if at least a fixating element of said plurality of fixating elements is arranged for being fixated to a connection arrangement, such as a twist lock, of said load.

It is advantageous, if said loading arrangement comprises a first loading device arranged for loading said load at a side thereof facing said front end arrangement and/or a second loading device arranged for loading said load at a side thereof facing said rear end arrangement.

In this regard, it is advantageous, if said second height adjustment device is arranged for varying a height of a part, such as a subframe, of said rear end arrangement for varying a height of said second loading device relative to said ground surface while said wheels are supporting said rear end arrangement on said ground surface.

Preferably, said first loading device and/or said second loading device comprise a lift device arranged for lifting said load, in vertical direction, from said ground surface and, preferably, wherein said lift device comprises a subset of said plurality of fixation elements.

Preferably, said first loading device and said second loading devices are provided at sides of said front end arrangement and said rear end arrangement that are facing each other.

It is advantageous, if said first loading device and/or said second loading device comprises a first guide element that is movable between a loading position and a transport position, wherein in said loading position said first guide element is arranged for guiding said corresponding lift device in said loading direction. Providing the guide element is beneficial for realising a relative reliable movement of the load in the loading direction.

It is beneficial, if said first loading device and/or said second loading device comprises a second guide element that is movable between a loading position and a transport position, wherein in said loading position said second guide element is arranged for guiding said corresponding lift device in said loading direction, wherein said first guide element and said second guide element are arranged for loading said load from opposite sides of said trailer.

Preferably, said first guide element and/or said second guide element, in said loading position thereof, is/are resting on said ground surface. Resting said first guide element and/or said second guide element on the ground surface during loading of the load is beneficial for stabilizing the trailer thereby avoiding or at least significantly reducing the risk of the trailer tipping over.

Preferably, said first guide element and/or said second guide element, in said transport position, is/are extending in vertical direction for blocking movement of said lift device in said loading direction.

It is advantageous, if said first guide element and/or said second guide element comprise a rail.

Preferably, said first loading device comprises a first displacement arrangement for displacing said first guide element in said loading direction relative to said frame when said first guide element is in said loading position. This is beneficial for allowing loading a load that is at a relative large distance from said frame. In addition, this allows for a relative short first guide element. A relative short first guide element is beneficial for reducing a height of said first guide element, in the transport position thereof, above said ground surface.

Preferably, said second loading device comprises a second displacement arrangement for displacing said second guide element in said loading direction relative to said frame when said second guide element is in said loading position. This is beneficial for allowing loading a load that is at a relative large distance from said frame. In addition, this allows for a relative short second guide element. A relative short second guide element is beneficial for reducing a height of said second guide element, in the transport position thereof, above said ground surface.

It is noted that the total height of the trailer including the first guide element and the second guide element may be limited by local law. The first and second displacement arrangements allow to realise a relative practical trailer while meeting total height requirements.

In an embodiment said first guide element and/or said second guide element are telescopic elements such that a functional length of said first guide element and/or said second guide element is variable between predetermined lengths.

In this regard, it is beneficial if said lift device comprises wheel elements that are arranged for cooperating with said guide element for said moving of said lift device in said loading direction.

Preferably, said guide element is pivotable about a pivot axis for moving said guide element between said loading position and said transport position.

In a practical embodiment of the trailer according to the present disclosure, said loading arrangement is an integral part of said height adjustment arrangement. This is beneficial for realising a relative accurate positioning of the load relative to the frame.

According to the second aspect, the present disclosure relates to a transport arrangement comprising a towing vehicle and a trailer according to the first aspect of the present disclosure, wherein said trailer is coupled to said towing vehicle for transporting said trailer, by said towing vehicle, in said towing direction.

Embodiments of the transport arrangement according to the second aspect correspond to embodiments of the trailer according to the first aspect of the present disclosure. The advantages of the transport arrangement according to the second aspect correspond to advantages of the trailer according to first aspect of the present disclosure presented previously.

Preferably, said transport arrangement comprises an intermodal container, wherein said intermodal container is fixated, by said fixation elements, to said trailer, wherein a stiffness of said combination of said intermodal container and said trailer is larger than a stiffness of said trailer alone.

In this regard, it is beneficial if said fixation elements comprise twist locks, wherein said intermodal container is fixated, via said twist locks, to said trailer.

According to the third aspect, the present disclosure relates to a method for loading and transporting a load such as an intermodal container using a trailer according the first aspect of the present disclosure, wherein said method comprises the step of:
- loading, by said loading arrangement, said load onto said trailer in said loading direction that is transverse to said towing direction of said trailer.

Embodiments of the method according to the third aspect correspond to embodiments of the transport arrangement according to the second aspect and to embodiments of the trailer according to the first aspect of the present disclosure. The advantages of the method of the third aspect correspond to advantages of the transport arrangement according to the second aspect and to advantages of the trailer according to first aspect of the present disclosure presented previously.

Preferably, said method further comprises the step of:
- setting a distance, by said extension arrangement, in said towing direction, between said front end arrangement and said rear end arrangement for accommodating said load. This is beneficial for realising a relative flexible transport method wherein the trailer may be used for a relative large range of different loads.

It is advantageous, if said method further comprises the step of:
- adjusting a height, by said height adjustment arrangement, of said frame above said ground surface. This allows for avoiding the need for lifting the load, or at least lifting the load by a relative small height, before moving the load onto the trailer.

Preferably, said method further comprises the step of:
- lifting, by said first loading device and/or said second loading device said load, in vertical direction, from said ground surface.

Preferably, said method further comprises the steps of:
- moving said first guide element between said loading position and said transport position; and
- guiding, by said first guide element in said loading position thereof, said corresponding lift device in said loading direction.

Embodiments of the trailer, transport arrangement and method according to the present disclosure will next be explained by means of the accompanying schematic figures, wherein:
Fig. 1A, 1B, and 1C show a top view, a side view, and an isometric view, respectively, of a transport arrangement according to the second aspect of the present disclosure;
Fig. 2A and 2B show an side view of a first embodiment of a trailer according to the first aspect of the present disclosure in a second height position and a first height position;
Fig. 3 shows an isometric view of the trailer of Fig. 2;
Fig. 4 shows an isometric view of the trailer of Fig. 2 in an extended state of the trailer;
Fig. 5 - 8, each show a top view, a side view, and an isometric view, respectively, of the trailer of Fig. 2, in subsequent states of the trailer, for loading and transporting a load;
Fig. 9A, 9B, and 9C show a top view, a side view, and an isometric view, respectively, of a second embodiment of a trailer according to the first aspect of the present disclosure;
Fig. 10 shows schematically the steps of a method according to the third aspect of the present disclosure.

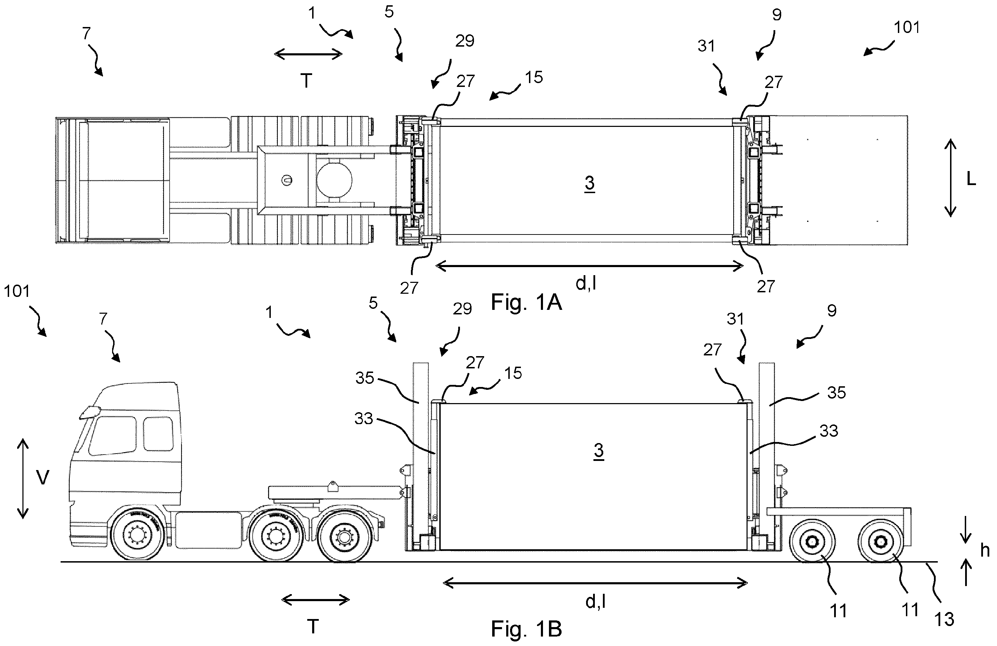

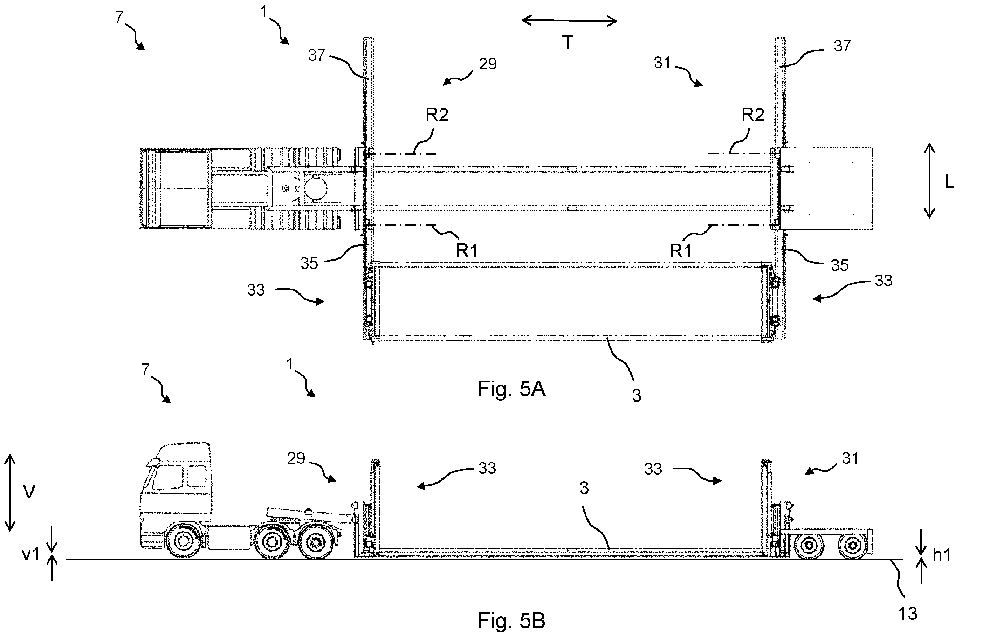

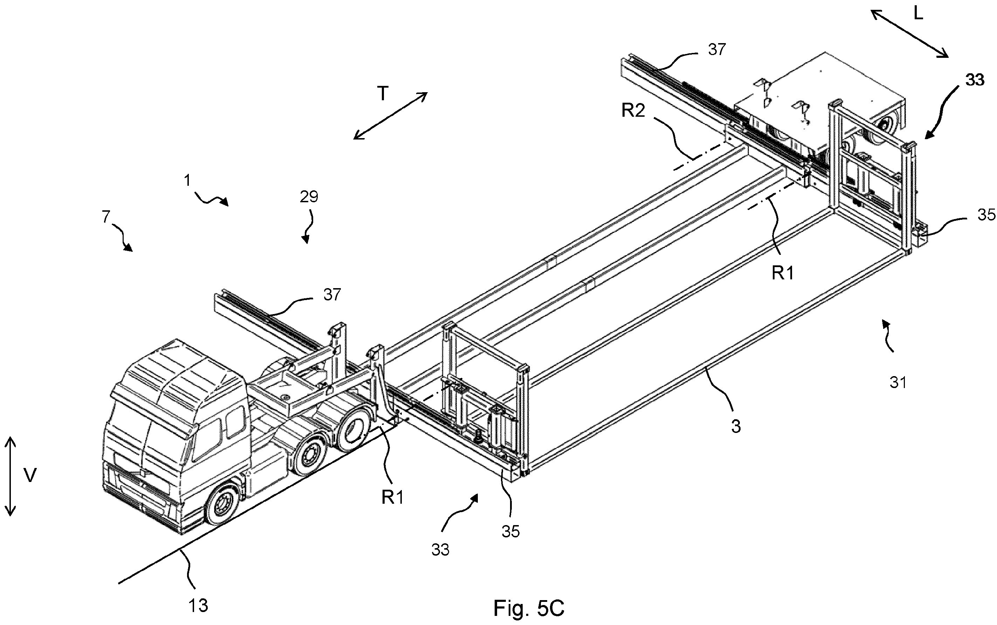

The transport arrangement 101 comprises a towing vehicle 7 and a trailer 1 arranged for loading and transporting a load 3. The load 3 is for example an intermodal container, as indicated in figures 1A - 1C, or a metal frame, as indicated in figures 5 - 9. The trailer 1 is coupled to the towing vehicle 7 for transporting the trailer 1 in a towing direction T. The load 3 is fixated to the trailer 1 by fixation elements 27, such that a stiffness of the combination of the load 3 and the trailer 1 is larger than a stiffness of the trailer 1 alone. The stiffness of the trailer 1 alone is high enough for allowing the trailer 1 to be transported when the trailer 1 is not loaded.

The trailer 1 comprises a front end arrangement 5, a rear end arrangement 9, a loading arrangement 15, and a frame 17. The front end arrangement 5 is arranged for coupling the trailer 1 to the towing vehicle 7 for towing the trailer 1 and is arranged for supporting a part the load 3 at a frond end side the of load 3. The rear end arrangement 9 is arranged for supporting another part the load 3 at a rear end side of the load 3. The rear end arrangement 9 comprises wheels 11 for supporting the rear end arrangement 9 on a ground surface 13. The loading arrangement 15 is an integral part of the height adjustment arrangement 17.

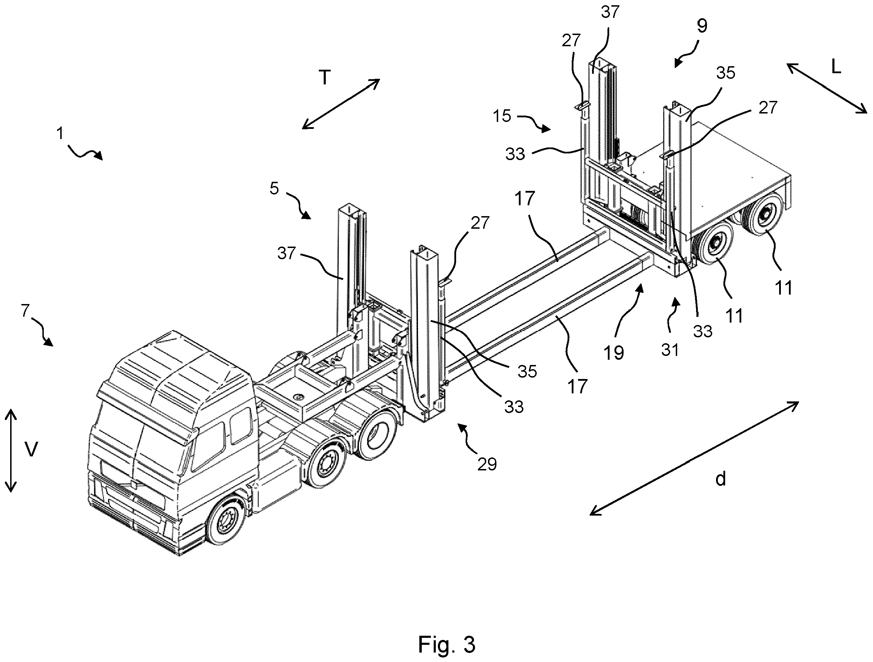

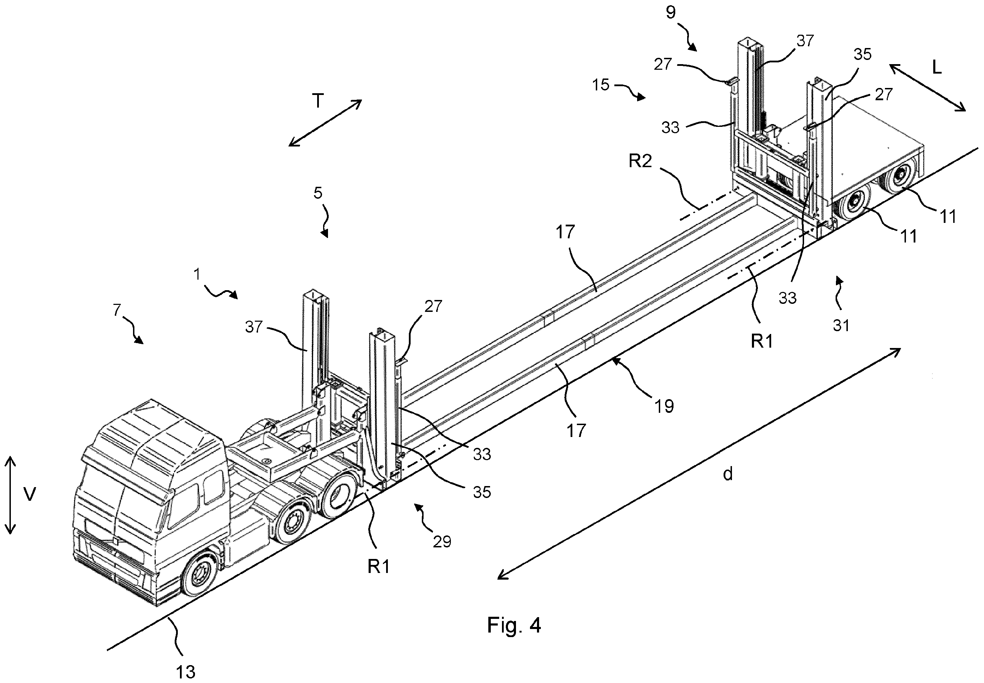

The loading arrangement 15 is arranged for loading the load 3 onto the trailer 1 in a loading direction L that is transverse to the towing direction T of the trailer 1. The frame 17 connects the front end arrangement 5 to the rear end arrangement 9 and supports the loading arrangement 15. The frame 17 may be formed by a single frame bar or alternatively may comprise two frame parts, wherein the outer dimensions of one frame part are smaller than the inner dimensions of the other frame part, such that the two frame parts are slidably connected to each other. By means of a pulling action of the towing vehicle 7 onto the front end arrangement 5 a distance d can be varied in the towing direction T, between a minimal distance d as indicated in figure 3, and a maximum distance d as indicated in figure 4. During said varying of said distance the rear end arrangement is maintained in a predetermined position by braking the wheels 11. By varying the distance d between the front end arrangement 5 and the rear end arrangement 9, the trailer is accommodated for different lengths l of loads 3.

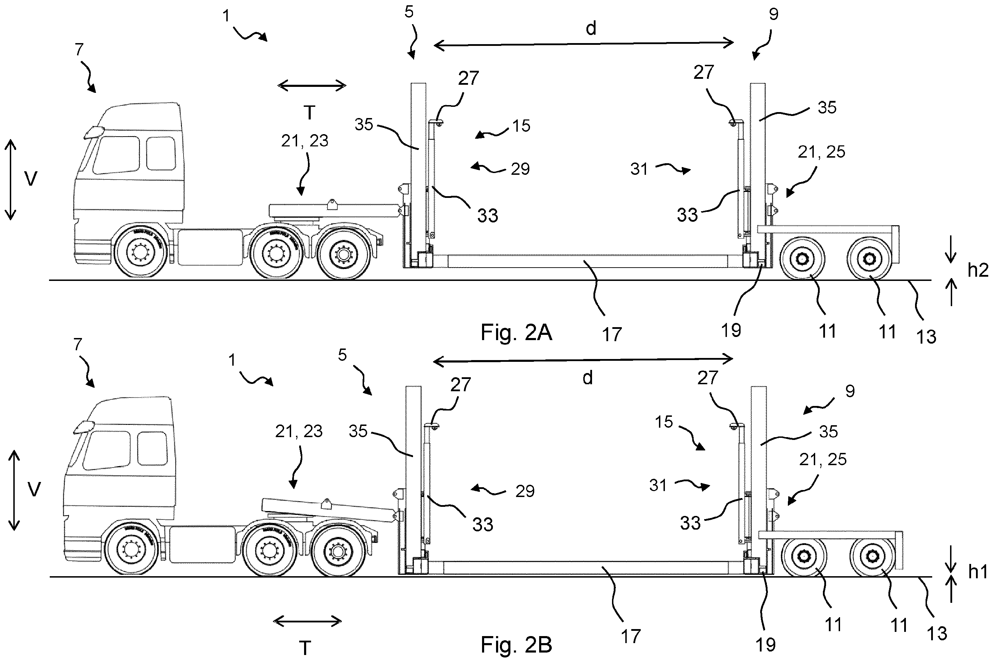

The trailer 1 is provided with a height adjustment arrangement 21 for varying a height h of the frame 17 above the ground surface 13. The height adjustment arrangement 21 is arranged for moving the frame 17 of the trailer 1 in a first height position h1, wherein the frame 17 is resting on the ground surface 13, as indicated in figure 2B. In the first height position h1, the height h of the frame 17 is optimal for loading of the load 3 onto the trailer 1. Furthermore, the height adjustment arrangement 21 is arranged for moving the frame 17 of the trailer 1 in a second height position h2, as indicated in figure 2A. In the second height position h2, the height h of the frame 17 is in a raised position for transporting the load 3, by the trailer 1. The height adjustment arrangement 21 comprises a first height adjustment device 23, designed as an in height adjustable fifth-wheel coupling mechanism 23, for varying a height of the front end arrangement 5 relative to the ground surface 13. Furthermore, the height adjustment arrangement 21 comprises a second height adjustment device 25, designed as an in height adjustable axis system 25 to which the wheels 11 are rotatably connected, for varying a height of the rear end arrangement 9 relative to said ground surface, wherein the frame 17 can be moved between the first height position and the second height position.

The loading arrangement 15 is provided with four fixation elements 27 for fixating the load 3 during the loading and the transporting. Two of the fixation elements 27 are provided at the front end arrangement 5 and two of the fixation elements 27 are provided at the rear end arrangement 9. The loading arrangement 15 comprises a first loading device 29, provided at the front end arrangement 5 and arranged for loading the load 3 at a side thereof facing the front end arrangement 5 and a second loading device 31, provided at the rear end arrangement 9 and arranged for loading the load 3 at a side thereof facing said rear end arrangement 9. The first loading device 29 and the second loading device 31 are operating in cooperation with each other, for loading the load 3 to the trailer 1.

The first loading device 29 and the second loading device 31 each comprise two lift devices 33. The lift devices 33 are arranged for lifting the load 3 in a vertical direction V, from the ground surface 13, between a first position v1 of the load 3 and a second raised position v2 of the load 3. Each lift device 33 is provided with a fixation element 27, for fixating the load 3 during the loading and the transporting. Both the first loading device 29 and the second loading device 31 comprise a first guide element 35, provided at one side of the trailer 1, and a second guide element 37, provided at the other side of the trailer 1. The first guide elements 35 and the second guide elements 37 are arranged for loading the load 3 from opposite sides of the trailer 1.

The first guide elements 35 and the second guide elements 37 are movable between a loading position, as indicated in for example figures 5A - 5C wherein the first guide elements 35 and the second guide elements 37 are positioned substantially horizontal in relation to the ground surface 13, and a transport position, as indicated in for example figure 4 wherein the first guide elements 35 and the second guide elements 37 are positioned substantially vertical in relation to the ground surface 13. The first guide elements 35 are movable from the transport position into the loading position, by rotating the first guide elements 35 about a pivot axis R1 about approximately 90 degrees, wherein the pivot axis R1 is parallel to the towing direction T of the trailer 1. The second guide elements 37 are movable from the transport position into the loading position, by rotating the second guide elements 37 about a pivot axis R2 about approximately 90 degrees, wherein the pivot axis R2 is parallel to the pivot axis R1. Each of the respective first guide elements 35 and the respective second guide elements 37 are actuated between the transport position and loading position by a hydraulic cylinder.

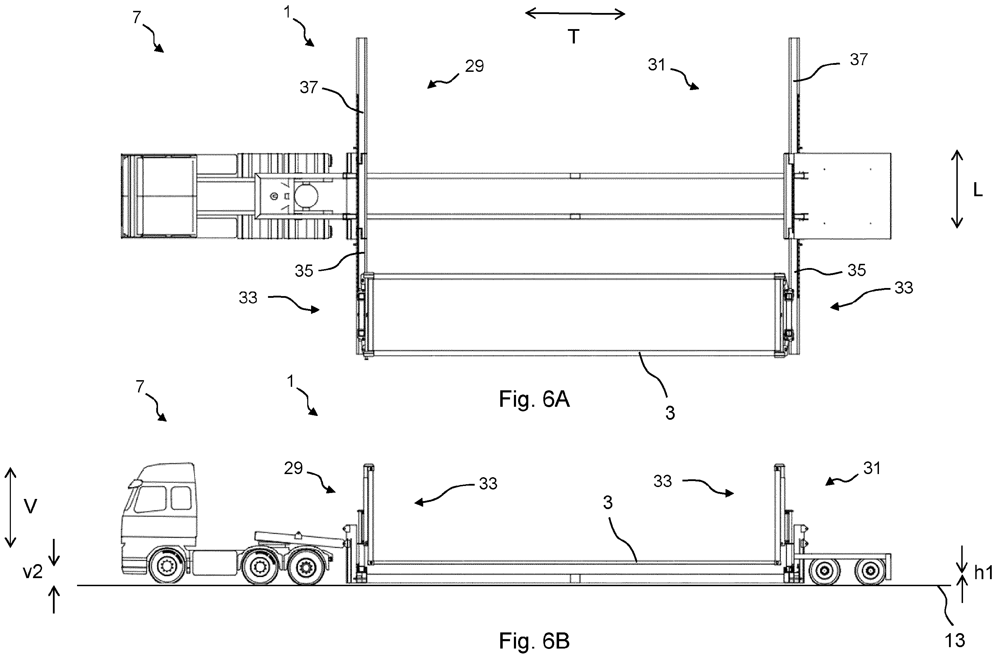

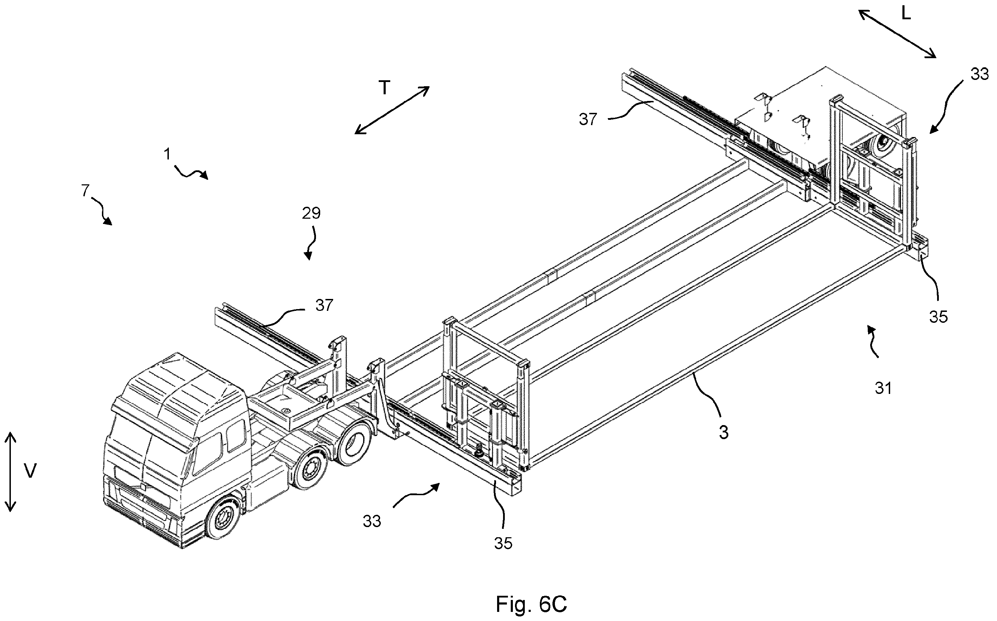

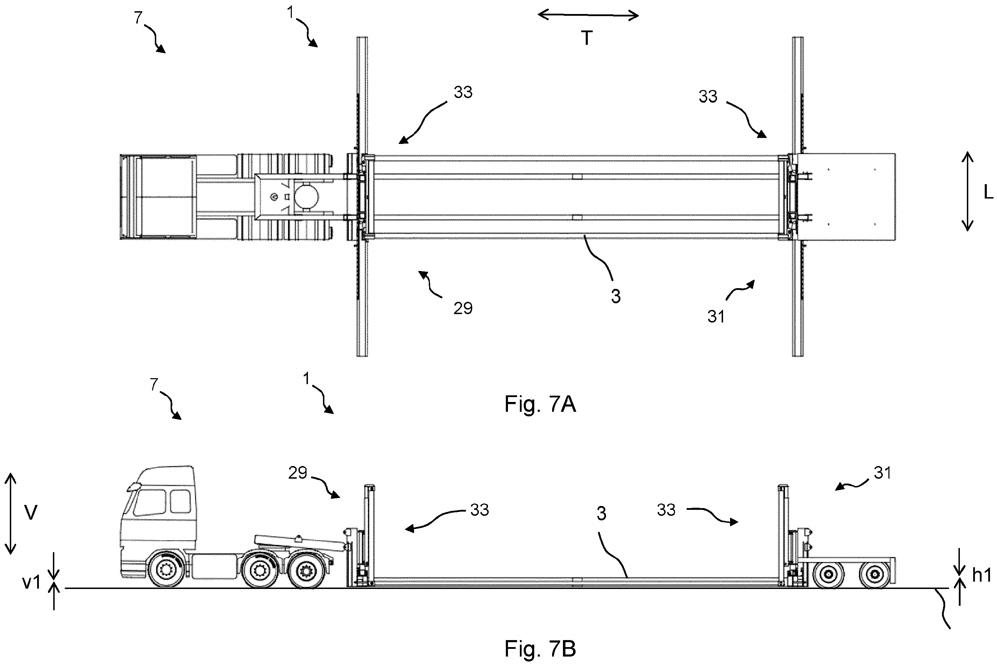

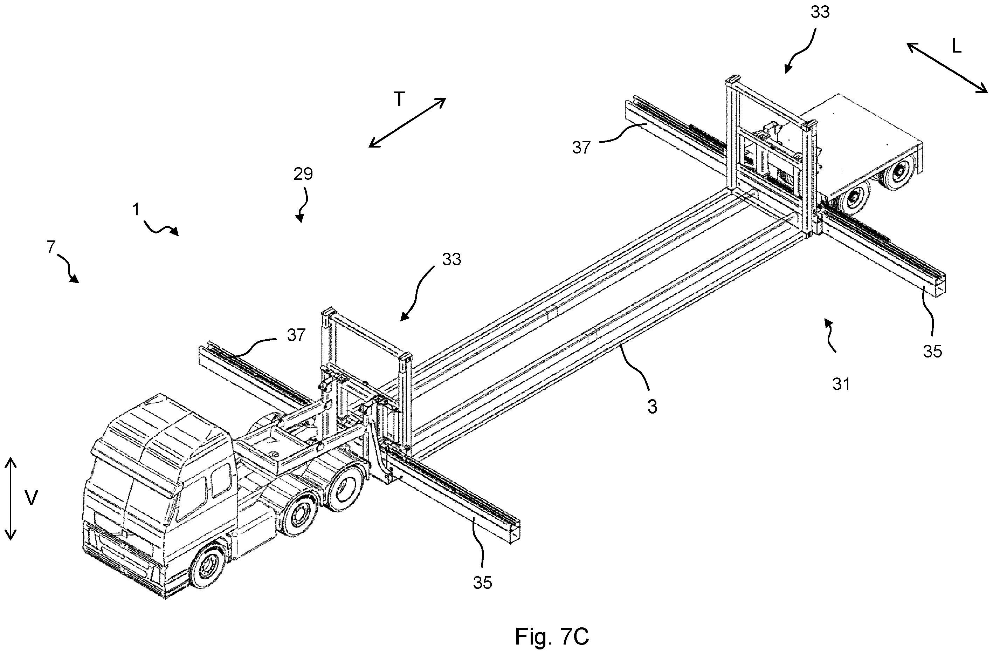

When the first guide elements 35 are positioned in the loading position, the first guide elements 35 are arranged for guiding the corresponding lift devices 33 in the loading direction L from one side of the trailer 1, between a transport position of the lift devices 33, as indicated in figures 7A - 7C, and a loading position of the lift devices, as indicated in figures 6A - 6C. When the second guide elements 37 are positioned in the loading position, the second guide element 37 are arranged for guiding the corresponding lift devices 33 in the loading direction L, from another, opposite side of the trailer 1. In the loading position of the first guide elements 35 and/or the second guide elements 37, the first guide elements 35 and/or the second guide elements 37 are resting on the ground surface 13, and the load 3 is positioned at the first position v1.

When the first guide elements 35 and the second guide elements 37, are positioned in the transport position, movement of the first loading device 29 and the second loading device 31 in the loading direction L is blocked.

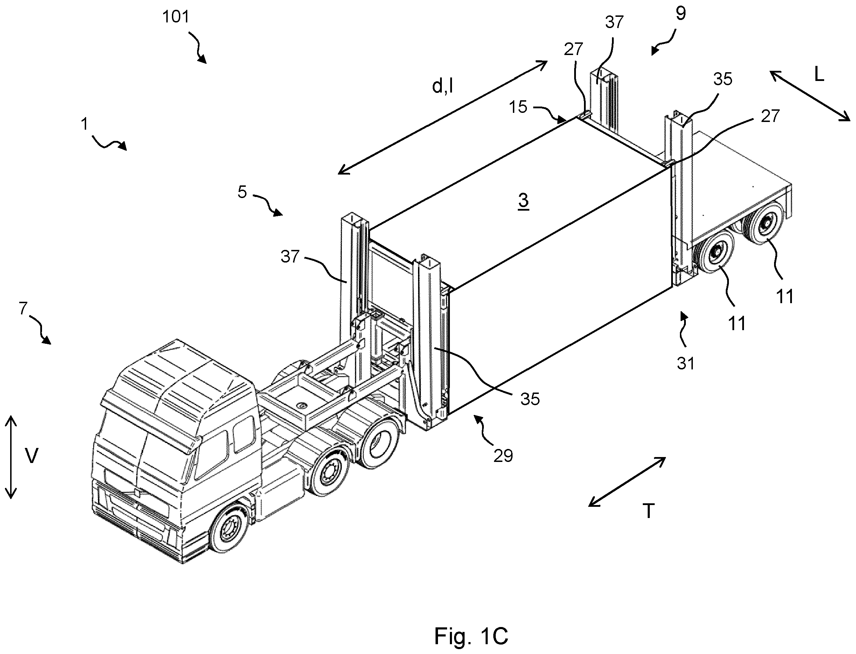

For improvement of clarity of the figures 1 - 9, not all corresponding reference numbers are shown in each corresponding figure. However, the skilled person can apply each reference number mutatis mutandis to each corresponding figure.

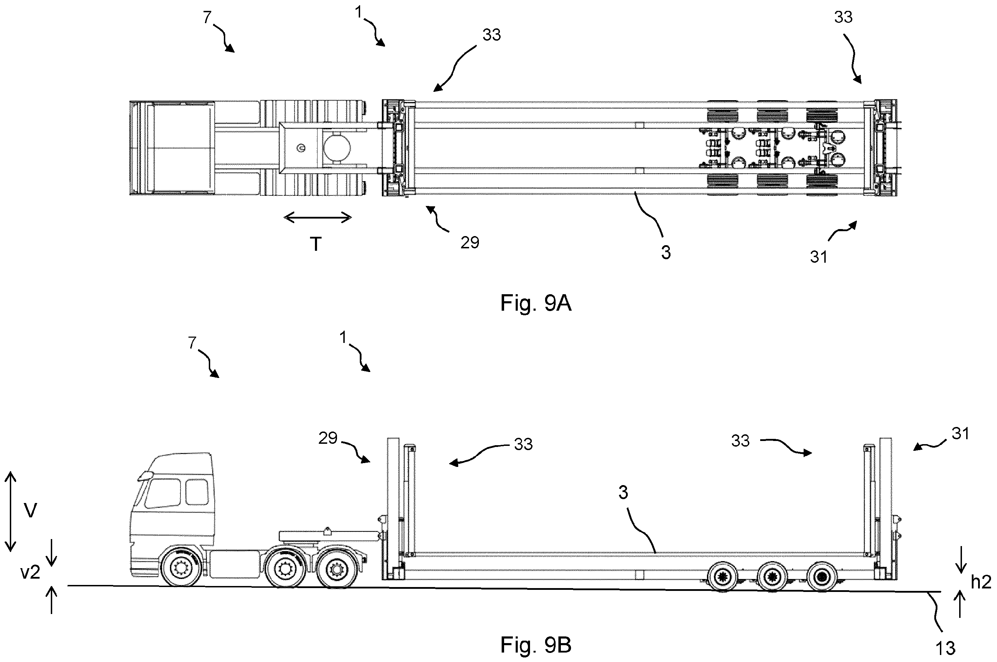

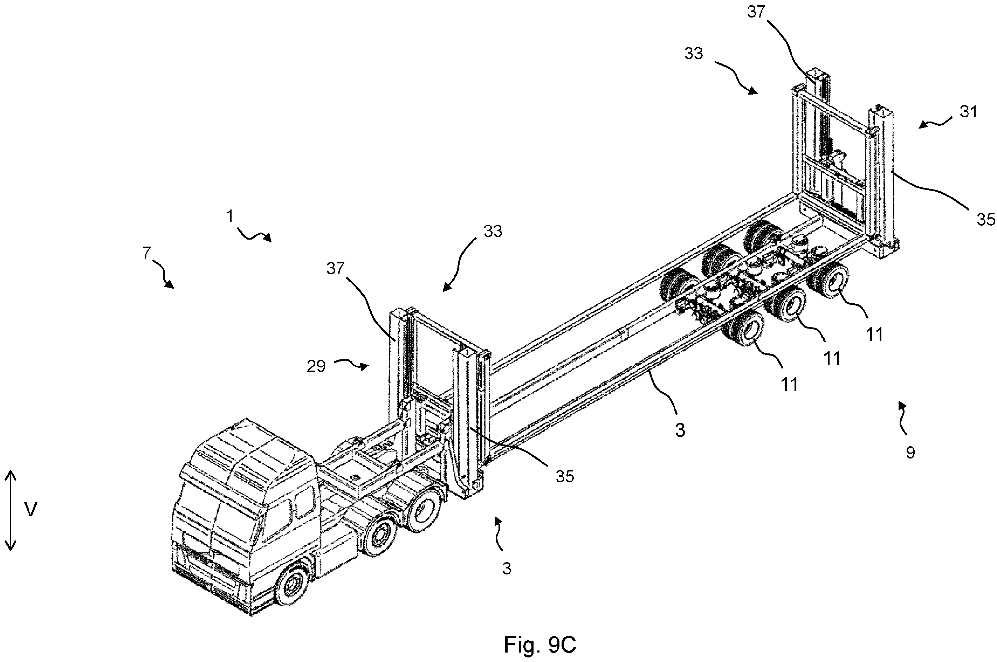

In the first embodiment of the trailer 1 according to the present disclosure as shown in figure 1 - 8, the trailer 1 comprises 4 wheels that are provided behind second loading device 31. In the second embodiment of the trailer 1 according to the present disclosure as shown in figure 9, the trailer 1 comprises 6 wheels that are provided, seen in said towing direction T, between said first loading device 29 and the second loading device 31.

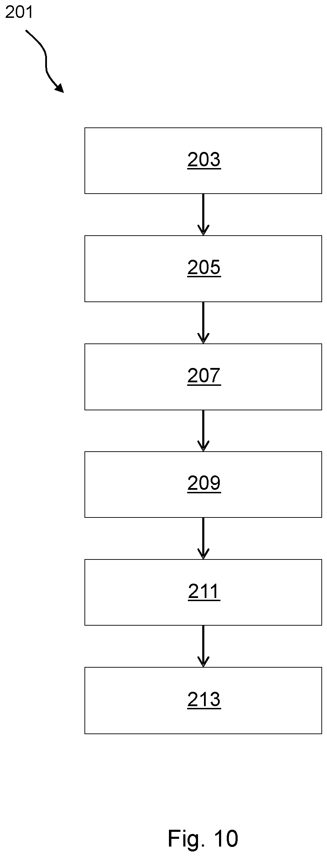

Figure 10 shows a method 201 for loading and transporting a load 3 using the trailer 1 as described above. During a first step 203 of the method 201, the distance d is set, by the extension arrangement 19, in the towing direction T, between the front end arrangement 5 and the rear end arrangement 9 for accommodating the load 3. At the end of the first step 203, the trailer 1 is in a state as indicated in figure 4.

In a second step 205 of method 201, the height h of the frame 17 above the ground surface 13 is adjusted by the height adjustment arrangement 21, such that the trailer 1 is in a first height position h1, wherein the frame 17 is resting on the ground surface 13. The first guide elements 35 are positioned in the loading position, after which the load 3 is applied to the trailer 1. At the end of the step 205, the trailer 1 is in a state as indicated in figure 5A - 5C, wherein the load 3 is applied to the trailer 1.

In a subsequent step 207 of method 201, the load 3 is lifted in the vertical direction V from the ground surface 13, by the first loading device 29 and the second loading device 31, from a first position v1 of the load 3 to a second raised position v2 of the load 3. At the end of the step 207, the trailer 1 is in a state as indicated in figure 6A - 6C.

In a next step 209 of the method 201, the lift devices 33 including the load 3 is guided in the loading direction L, by the first guide elements 35 in the loading position thereof. During the step of loading 211, the load 3 is loaded onto the trailer 1 in the loading direction L transverse to the towing direction T of the trailer 1, by the loading arrangement 15. At the end of the step 211, the trailer 1 is in a state as indicated in figure 7A - 7C.

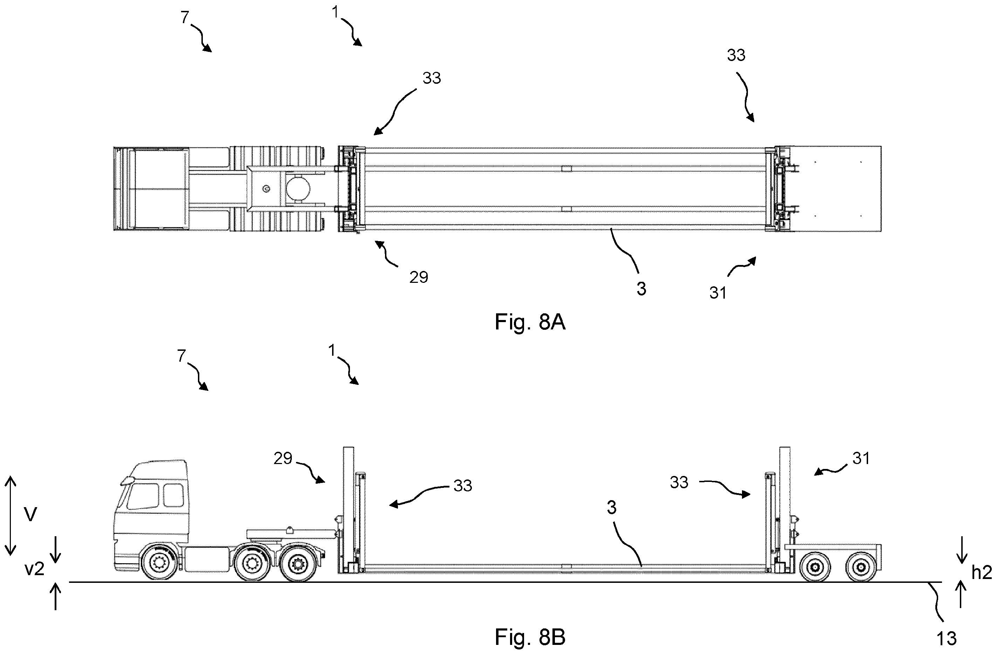

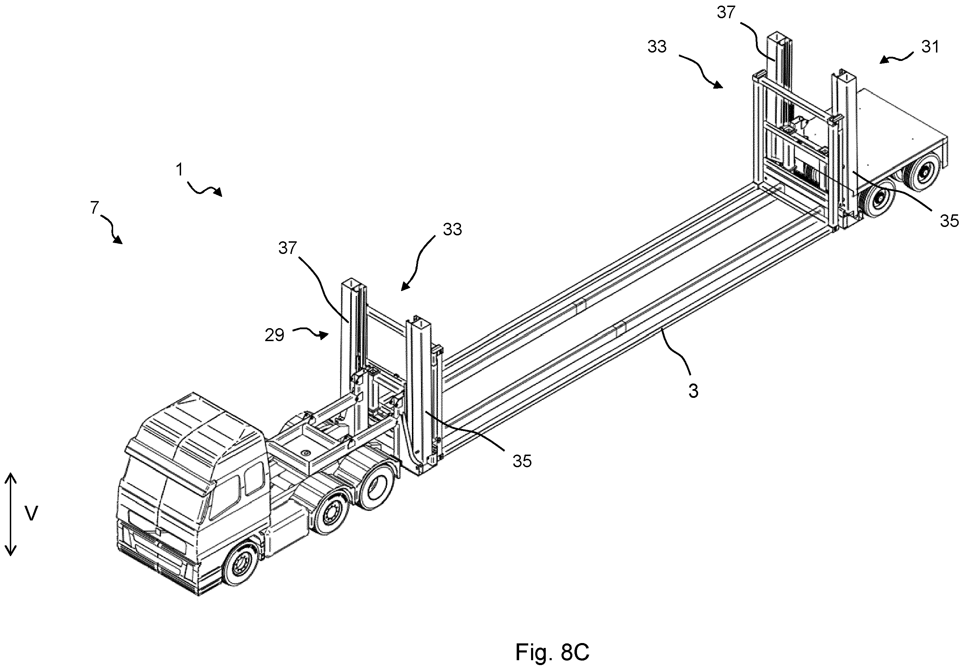

In a final step 213 of method 201, the first guide element 35 are moved between the loading position and the transport position, after which the trailer 1 is securely loaded with the load 3 and ready for transporting the load 3. At the end of the step 213, the trailer 1 is in a state as indicated in figure 8A - 8C for the trailer 1 of the first embodiment, and as indicated in figure 9A - 9C for the trailer of the second embodiment.

It is noted that during the method 201 the second guide elements 37, contrary as showed in the figures, may be maintained in the transport position.

## Claims

1. A trailer (1) arranged for loading and transporting a load (3) such as an intermodal container, wherein said trailer (1) comprises:
- a front end arrangement (5) arranged for coupling said trailer (1) to a towing vehicle (7) for towing said trailer (1) and arranged for supporting a part said load (3);
- a rear end arrangement (9) arranged for supporting another part of said load (3) at a side of said load (3) facing away from said front end arrangement (5) and comprising wheels (11) for supporting said rear end arrangement (9) on a ground surface (13);
- a loading arrangement (15) arranged for loading said load (3) onto said trailer (1) in a loading direction (L) that is transverse to a towing direction (T) of said trailer (1);
- a frame (17) connecting said front end arrangement (5) to said rear end arrangement (9);
**characterized in that** the trailer (1) comprises:
- a height adjustment arrangement (21) arranged for varying a height (h) of said frame (17) above said ground surface (13), wherein said height adjustment arrangement (21) is arranged for moving said frame (17) between a first height position wherein said frame (17) is resting on said ground surface (13) for said loading of said load (3) onto said trailer (1) and a second height position wherein said frame (17) is in a raised position for said transporting, by said trailer (1), of said load (3).

2. The trailer (1) according to claim 1, wherein said frame (17) comprises an extension arrangement (19) for varying a distance (d), in said towing direction (T), between said front end arrangement (5) and said rear end arrangement (9) for accommodating loads (3) of different lengths (l).

3. The trailer (1) according to claim 1 or 2, wherein said height adjustment arrangement (21) comprises a first height adjustment device (23) for varying a height of said front end arrangement (5) relative to said ground surface (13) for said varying said height of said frame (17) above said ground surface (13) and/or a second height adjustment device (25) for varying a height of said rear end arrangement (9) relative to said ground surface (13) for varying said height of said frame (17) above said ground surface (13).

4. The trailer (1) according to any one of the preceding claims, wherein said loading arrangement (15) comprises a plurality fixation elements (27) for fixating said load (3) during said loading and said transporting and/or wherein said loading arrangement (15) comprises a first loading device (29) arranged for loading said load (3) at a side thereof facing said front end arrangement (5) and/or a second loading device (31) arranged for loading said load (3) at a side thereof facing said rear end arrangement (9) and/or wherein said loading arrangement (15) is an integral part of said height adjustment arrangement (21).

5. The trailer (1) according to claim 4, wherein said first loading device (29) and/or said second loading device (31) comprise a lift device (33) arranged for lifting said load (3), in vertical direction (V), from said ground surface (13) and, preferably, wherein said lift device (33) comprises a subset of said plurality of fixation elements (27).

6. The trailer (1) according to claim 4 or 5, wherein said first loading device (29) and/or said second loading device (31) comprises a first guide element (35) that is movable between a loading position and a transport position, wherein in said loading position said first guide element (35) is arranged for guiding said corresponding lift device (33) in said loading direction (L).

7. The trailer (1) according to any one of the claims 4 to 6, wherein said first loading device (29) and/or said second loading device (31) comprises a second guide element (37) that is movable between a loading position and a transport position, wherein in said loading position said second guide element (37) is arranged for guiding said corresponding lift device (33) in said loading direction (L), wherein said first guide element (35) and said second guide element (37) are arranged for loading said load (3) from opposite sides of said trailer (1).

8. The trailer (1) according to claim 6 or 7, wherein said first guide element (35) and/or said second guide element (37), in said loading position thereof, is/are resting on said ground surface (13).

9. The trailer (1) according to claim 6, 7 or 8, wherein said first guide element (35) and/or said second guide element (37), in said transport position, is/are extending in vertical direction (V) for blocking movement of said lift device (29, 31) in said loading direction (L).

10. A transport arrangement (101) comprising a towing vehicle (7) and a trailer (1) according to any one of the preceding claims, wherein said trailer (1) is coupled to said towing vehicle (7) for transporting said trailer (1), by said towing vehicle (7), in said towing direction (T).

11. The transport arrangement (101) according to claim 10 comprising a trailer (1) according to claim 6 and an intermodal container (3), wherein said intermodal container (3) is fixated, by said fixation elements (27), to said trailer (1), wherein a stiffness of said combination of said intermodal container (3) and said trailer (1) is larger than a stiffness of said trailer (1) alone.

12. A method (201) for loading and transporting a load (3) such as an intermodal container using a trailer (1) according any one of the claims 1 to 9, wherein said method (201) comprises the step of:
- loading (211), by said loading arrangement (15), said load (3) onto said trailer (1) in said loading direction (L) that is transverse to said towing direction (T) of said trailer (1).

13. The method (201) according to claim 12 using a trailer (1) according to claim 2, wherein said method (201) further comprises the step of:
- setting (203) a distance (d), by said extension arrangement (19), in said towing direction (T), between said front end arrangement (5) and said rear end arrangement (9) for accommodating said load (3).

14. The method (201) according to claim 12 or 13, wherein said method (201) further comprises the step of:
- adjusting (205) a height (h), by said height adjustment arrangement (21), of said frame (17) above said ground surface (13).

15. The method (201) according to any one of the claims 12 to 14 using a trailer (1) according to claim 5, wherein said method (201) further comprises the step of:
- lifting (207), by said first loading device (29) and/or said second loading device (31) said load (3), in vertical direction (V), from said ground surface (13) and/or using a trailer (1) according to claim 6, wherein said method (201) further comprises the steps of:
- moving (213) said first guide element (35) between said loading position and said transport position; and
- guiding (209), by said first guide element (35) in said loading position thereof, said corresponding lift device (33) in said loading direction (L).

## Patentansprüche

1. Anhänger (1), der zum Laden und Transportieren einer Last (3) wie beispielsweise eines Intermodal-Containers ausgelegt ist, wobei der Anhänger (1) Folgendes umfasst:
- eine vordere Endanordnung (5), die zum Koppeln des Anhängers (1) mit einem Zugfahrzeug (7) zum Ziehen des Anhängers (1) und zum Tragen eines Teils der Last (3) angeordnet ist;
- eine hintere Endanordnung (9), die zum Tragen eines anderen Teils der Last (3) an einer Seite der Last (3) angeordnet ist, die von der vorderen Endanordnung (5) abgewandt ist, und die Räder (11) zum Tragen der hinteren Endanordnung (9) auf einer Bodenfläche (13) umfasst;
- eine Ladeanordnung (15), die zum Laden der Last (3) auf den Anhänger (1) in einer Laderichtung (L) quer zu einer Zugrichtung (T) des Anhängers (1) angeordnet ist;
- einen Rahmen (17), der die vordere Endanordnung (5) mit der hinteren Endanordnung (9) verbindet;
**dadurch gekennzeichnet, dass** der Anhänger (1) Folgendes umfasst:
- eine Höhenverstellanordnung (21), die zum Variieren einer Höhe (h) des Rahmens (17) über der Bodenfläche (13) angeordnet ist, wobei die Höhenverstellanordnung (21) zum Bewegen des Rahmens (17) zwischen einer ersten Höhenposition, in der der Rahmen (17) auf der Bodenfläche (13) zum Laden der Last (3) auf den Anhänger (1) ruht, und einer zweiten Höhenposition angeordnet ist, in der sich der Rahmen (17) in einer angehobenen Position zum Transportierender Last (3) durch den Anhänger (1) befindet.

2. Anhänger (1) nach Anspruch 1, wobei der Rahmen (17) eine Verlängerungsanordnung (19) umfasst, um einen Abstand (d) in der Zugrichtung (T) zwischen der vorderen Endanordnung (5) und der hinteren Endanordnung (9) zu variieren, um Lasten (3) unterschiedlicher Längen (I) aufzunehmen.

3. Anhänger (1) nach Anspruch 1 oder 2, wobei die Höheneinstellanordnung (21) eine erste Höheneinstellvorrichtung (23) zum Variieren einer Höhe der vorderen Endanordnung (5) relativ zu der Bodenfläche (13) zum Variieren der Höhe des Rahmens (17) über der Bodenfläche (13) und/oder eine zweite Höheneinstellvorrichtung (25) zum Variieren einer Höhe der hinteren Endanordnung (9) relativ zu der Bodenfläche (13) zum Variieren der Höhe des Rahmens (17) über der Bodenfläche (13) umfasst.

4. Anhänger (1) nach einem der vorhergehenden Ansprüche, wobei die Ladeanordnung (15) eine Vielzahl von Befestigungselementen (27) zum Befestigen der Last (3) während des Ladens und des Transportierens umfasst und/oder wobei die Ladeanordnung (15) eine erste Ladevorrichtung (29) umfasst, die dazu ausgelegt ist, die Last (3) an einer der vorderen Endanordnung (5) zugewandten Seite zu laden, und/oder eine zweite Ladevorrichtung (31) umfasst, die dazu ausgelegt ist, die Last (3) an einer der hinteren Endanordnung (9) zugewandten Seite zu laden, und/oder wobei die Ladeanordnung (15) ein integraler Bestandteil der Höhenverstellanordnung (21) ist.

5. Anhänger (1) nach Anspruch 4, wobei die erste Ladevorrichtung (29) und/oder die zweite Ladevorrichtung (31) eine Hubvorrichtung (33) umfassen, die dazu ausgelegt ist, die Last (3) in vertikaler Richtung (V) von der Bodenfläche (13) anzuheben, und wobei die Hubvorrichtung (33) vorzugsweise eine Teilmenge der Vielzahl von Befestigungselementen (27) umfasst.

6. Anhänger (1) nach Anspruch 4 oder 5, wobei die erste Ladevorrichtung (29) und/oder die zweite Ladevorrichtung (31) ein erstes Führungselement (35) umfassen, das zwischen einer Ladeposition und einer Transportposition bewegbar ist, wobei das erste Führungselement (35) in der Ladeposition dazu ausgelegt ist, die entsprechende Hubvorrichtung (33) in der Laderichtung (L) zu führen.

7. Anhänger (1) nach einem der Ansprüche 4 bis 6, wobei die erste Ladevorrichtung (29) und/oder die zweite Ladevorrichtung (31) ein zweites Führungselement (37) umfasst, das zwischen einer Ladeposition und einer Transportposition beweglich ist, wobei in der Ladeposition das zweite Führungselement (37) zum Führen der entsprechenden Hubvorrichtung (33) in der Laderichtung (L) angeordnet ist, wobei das erste Führungselement (35) und das zweite Führungselement (37) zum Laden der Last (3) von gegenüberliegenden Seiten des Anhängers (1) angeordnet sind.

8. Anhänger (1) nach Anspruch 6 oder 7, wobei das erste Führungselement (35) und/oder das zweite Führungselement (37) in seiner Ladeposition auf der Bodenfläche (13) ruhen.

9. Anhänger (1) nach Anspruch 6, 7 oder 8, wobei sich das erste Führungselement (35) und/oder das zweite Führungselement (37) in der Transportposition in vertikaler Richtung (V) erstrecken, um eine Bewegung der Hubvorrichtung (29, 31) in der Laderichtung (L) zu blockieren.

10. Transportanordnung (101), umfassend ein Zugfahrzeug (7) und einen Anhänger (1) nach einem der vorhergehenden Ansprüche, wobei der Anhänger (1) mit dem Zugfahrzeug (7) gekoppelt ist, um den Anhänger (1) durch das Zugfahrzeug (7) in der Zugrichtung (T) zu transportieren.

11. Transportanordnung (101) nach Anspruch 10, umfassend einen Anhänger (1) nach Anspruch 6 und einen intermodalen Container (3), wobei der intermodale Container (3) durch die Befestigungselemente (27) an dem Anhänger (1) befestigt ist, wobei eine Steifigkeit der Kombination aus dem intermodalen Container (3) und dem Anhänger (1) größer als eine Steifigkeit des Anhängers (1) allein ist.

12. Verfahren (201) zum Laden und Transportieren einer Last (3), wie etwa eines intermodalen Containers, unter Verwendung eines Anhängers (1) nach einem der Ansprüche 1 bis 9, wobei das Verfahren (201) den folgenden Schritt umfasst:
- Laden (211) der Last (3) durch die Ladeanordnung (15) auf den Anhänger (1) in der Laderichtung (L), die quer zur Zugrichtung (T) des Anhängers (1) verläuft.

13. Verfahren (201) nach Anspruch 12 unter Verwendung eines Anhängers (1) nach Anspruch 2, wobei das Verfahren (201) ferner den folgenden Schritt umfasst:
- Einstellen (203) eines Abstands (d) durch die Verlängerungsanordnung (19) in Zugrichtung (T) zwischen der vorderen Endvorrichtung (5) und der hinteren Endvorrichtung (9) zur Aufnahme der Last (3).

14. Verfahren (201) nach Anspruch 12 oder 13, wobei das Verfahren (201) ferner den folgenden Schritt umfasst:
- Einstellen (205) einer Höhe (h) durch die Höheneinstellanordnung (21) des Rahmens (17) über der Bodenfläche (13).

15. Verfahren (201) nach einem der Ansprüche 12 bis 14 unter Verwendung eines Anhängers (1) nach Anspruch 5, wobei das Verfahren (201) ferner den folgenden Schritt umfasst:
- Anheben (207) der Last (3) durch die erste Ladevorrichtung (29) und/oder die zweite Ladevorrichtung (31) in vertikaler Richtung (V) von der Bodenfläche (13) und/oder unter Verwendung eines Anhängers (1) nach Anspruch 6, wobei das Verfahren (201) ferner die folgenden Schritte umfasst:
- Bewegen (213) des ersten Führungselements (35) zwischen der Ladeposition und der Transportposition; und
- Führen (209) der entsprechenden Hubvorrichtung (33) durch das erste Führungselement (35) in seiner Ladeposition in der Laderichtung (L).

## Revendications

1. Remorque (1) agencée pour charger et transporter une charge (3) telle qu'un conteneur intermodal, où ladite remorque (1) comprend :
- un agencement d'extrémité avant (5) agencé pour coupler ladite remorque (1) à un véhicule remorqueur (7) pour remorquer ladite remorque (1) et agencé pour supporter une partie de ladite charge (3) ;
- un agencement d'extrémité arrière (9) agencé pour supporter une autre partie de ladite charge (3) sur un côté de ladite charge (3) opposé audit agencement d'extrémité avant (5) et comprenant des roues (11) pour supporter ledit agencement d'extrémité arrière (9) sur une surface de sol (13) ;
- un agencement de chargement (15) agencé pour charger ladite charge (3) sur ladite remorque (1) dans une direction de chargement (L) qui est transversale à une direction de remorquage (T) de ladite remorque (1) ;
- un châssis (17) reliant ledit agencement d'extrémité avant (5) audit agencement d'extrémité arrière (9) ;
La remorque (1) étant **caractérisée en ce qu'**elle comprend :
- un agencement de réglage de hauteur (21) agencé pour faire varier une hauteur (h) dudit châssis (17) au-dessus de ladite surface de sol (13), où ledit agencement de réglage de hauteur (21) est agencé pour déplacer ledit châssis (17) entre une première position de hauteur dans laquelle ledit châssis (17) repose sur ladite surface de sol (13) pour ledit chargement de ladite charge (3) sur ladite remorque (1) et une seconde position de hauteur dans laquelle ledit châssis (17) est dans une position surélevée pour ledit transport, par ladite remorque (1), de ladite charge (3).

2. Remorque (1) selon la revendication 1, dans laquelle ledit châssis (17) comprend un agencement d'extension (19) pour faire varier une distance (d), dans ladite direction de remorquage (T), entre ledit agencement d'extrémité avant (5) et ledit agencement d'extrémité arrière (9) pour recevoir des charges (3) de différentes longueurs (l).

3. Remorque (1) selon la revendication 1 ou 2, dans laquelle ledit agencement de réglage de hauteur (21) comprend un premier dispositif de réglage de hauteur (23) pour faire varier une hauteur dudit agencement d'extrémité avant (5) par rapport à ladite surface de sol (13) pour ladite variation de ladite hauteur dudit châssis (17) au-dessus de ladite surface de sol (13) et/ou un second dispositif de réglage de hauteur (25) pour faire varier une hauteur dudit agencement d'extrémité arrière (9) par rapport à ladite surface de sol (13) pour faire varier ladite hauteur dudit châssis (17) au-dessus de ladite surface de sol (13).

4. Remorque (1) selon l'une quelconque des revendications précédentes, dans laquelle ledit agencement de chargement (15) comprend une pluralité d'éléments de fixation (27) pour fixer ladite charge (3) pendant ledit chargement et ledit transport et/ou dans laquelle ledit agencement de chargement (15) comprend un premier dispositif de chargement (29) agencé pour charger ladite charge (3) sur un côté de celle-ci faisant face audit agencement d'extrémité avant (5) et/ou un second dispositif de chargement (31) agencé pour charger ladite charge (3) sur un côté de celle-ci faisant face audit agencement d'extrémité arrière (9) et/ou dans laquelle ledit agencement de chargement (15) fait partie intégrante dudit agencement de réglage de hauteur (21).

5. Remorque (1) selon la revendication 4, dans laquelle ledit premier dispositif de chargement (29) et/ou ledit second dispositif de chargement (31) comprennent un dispositif de levage (33) agencé pour soulever ladite charge (3), dans une direction verticale (V), à partir de ladite surface de sol (13) et, de préférence, dans laquelle ledit dispositif de levage (33) comprend un sous-ensemble de ladite pluralité d'éléments de fixation (27).

6. Remorque (1) selon l'une des revendications 4 ou 5, dans laquelle ledit premier dispositif de chargement (29) et/ou ledit second dispositif de chargement (31) comprennent un premier élément de guidage (35) qui est mobile entre une position de chargement et une position de transport, dans laquelle, dans ladite position de chargement, ledit premier élément de guidage (35) est agencé pour guider ledit dispositif de levage correspondant (33) dans ladite direction de chargement (L).

7. Remorque (1) selon l'une quelconque des revendications 4 à 6, dans laquelle ledit premier dispositif de chargement (29) et/ou ledit second dispositif de chargement (31) comprennent un second élément de guidage (37) qui est mobile entre une position de chargement et une position de transport, dans laquelle, dans ladite position de chargement, ledit second élément de guidage (37) est agencé pour guider ledit dispositif de levage correspondant (33) dans ladite direction de chargement (L), dans laquelle ledit premier élément de guidage (35) et ledit second élément de guidage (37) sont agencés pour charger ladite charge (3) depuis des côtés opposés de ladite remorque (1).

8. Remorque (1) selon l'une des revendications 6 ou 7, dans laquelle ledit premier élément de guidage (35) et/ou ledit second élément de guidage (37), dans ladite position de chargement de ceux-ci, reposent sur ladite surface de sol (13).

9. Remorque (1) selon l'une des revendications 6, 7 ou 8, dans laquelle ledit premier élément de guidage (35) et/ou ledit second élément de guidage (37), dans ladite position de transport, s'étendent dans la direction verticale (V) pour bloquer le mouvement dudit dispositif de levage (29, 31) dans ladite direction de chargement (L).

10. Agencement de transport (101) comprenant un véhicule remorqueur (7) et une remorque (1) selon l'une quelconque des revendications précédentes, dans lequel ladite remorque (1) est couplée audit véhicule remorqueur (7) pour transporter ladite remorque (1), par ledit véhicule remorqueur (7), dans ladite direction de remorquage (T).

11. Agencement de transport (101) selon la revendication 10 comprenant une remorque (1) selon la revendication 6 et un conteneur intermodal (3), dans lequel ledit conteneur intermodal (3) est fixé, par lesdits éléments de fixation (27), à ladite remorque (1), dans lequel une rigidité de ladite combinaison dudit conteneur intermodal (3) et de ladite remorque (1) est supérieure à une rigidité de ladite remorque (1) seule.

12. Procédé (201) pour charger et transporter une charge (3) telle qu'un conteneur intermodal utilisant une remorque (1) selon l'une quelconque des revendications 1 à 9, dans lequel ledit procédé (201) comprend l'étape :
- de chargement (211), par ledit agencement de chargement (15), de ladite charge (3) sur ladite remorque (1) dans ladite direction de chargement (L) qui est transversale à ladite direction de remorquage (T) de ladite remorque (1).

13. Procédé (201) selon la revendication 12 utilisant une remorque (1) selon la revendication 2, dans lequel ledit procédé (201) comprend en outre l'étape :
- de définition (203) d'une distance (d), par ledit agencement d'extension (19), dans ladite direction de remorquage (T), entre ledit agencement d'extrémité avant (5) et ledit agencement d'extrémité arrière (9) pour recevoir ladite charge (3).

14. Procédé (201) selon l'une des revendications 12 ou 13, dans lequel ledit procédé (201) comprend en outre l'étape :
- de réglage (205) d'une hauteur (h), par ledit agencement de réglage de hauteur (21), dudit châssis (17) au-dessus de ladite surface de sol (13).

15. Procédé (201) selon l'une quelconque des revendications 12 à 14 utilisant une remorque (1) selon la revendication 5, dans lequel ledit procédé (201) comprend en outre l'étape :
- de levage (207), par ledit premier dispositif de chargement (29) et/ou ledit second dispositif de chargement (31), de ladite charge (3), dans la direction verticale (V), à partir de ladite surface de sol (13) et/ou utilisant une remorque (1) selon la revendication 6, dans lequel ledit procédé (201) comprend en outre les étapes :
- de déplacement (213) dudit premier élément de guidage (35) entre ladite position de chargement et ladite position de transport ; et
- de guidage (209), par ledit premier élément de guidage (35) dans ladite position de chargement de celui-ci, dudit dispositif de levage correspondant (33) dans ladite direction de chargement (L).
